# EUROPÄISCHE PATENTANMELDUNG

(11) **EP 2 339 524 A1**
(43) Veröffentlichungstag der Anmeldung: **29.06.2011**
(21) Anmeldenummer: 09180633.1
(22) Anmeldetag: 23.12.2009
(51) Int. Cl.: G06Q 30/00

(54) **Verfahren zum Betrieb eines Internet-Portals zur Kaufunterstützung von Kunden**

(71) Anmelder: xplace GmbH, 37073 Göttingen (DE)
(72) Erfinder: Die Erfindernennung liegt noch nicht vor
(74) Vertreter: Rehberg, Bernhard Frank

(57) **Zusammenfassung**

Die Erfindung betrifft ein Verfahren zum Betrieb eines Internet-Portals zur Unterstützung von Kunden für einen Einkauf eines Produkts mit Produktübergabe in einer Verkaufsstätte (8).

Erfindungsgemäß wird über das Internet-Portal ein Produkt abgefragt, an welchem ein Kunde ein Interesse hat. Automatisiert wird die Position des Kunden ermittelt, beispielsweise über eine IP-Adresse, ein GPS-Signal oder die Eingabe der Position durch den Kunden. Von mehreren Verkaufsstätten (8) wird automatisiert mindestens eine Verkaufsstätte (8) ausgewählt nach der Entfernung der Verkaufsstätten (8) von der ermittelten Position des Kunden. Weiterhin wird durch Zugriff auf ein Warenwirtschaftssystem einer Verkaufsstätte (8) ein aktueller Bestand des abgefragten Produkts ermittelt. Schließlich wird über das Internet-Portal eine Ausgabe für den Kunden erzeugt, die sowohl von den ermittelten aktuellen Beständen des Produkts an mindestens einer Verkaufsstätte (8) als auch von der Entfernung von Verkaufsstätten (8) von der ermittelten Position des Kunden abhängig ist.

## Beschreibung

### TECHNISCHES GEBIET DER ERFINDUNG

Die Erfindung betrifft ein Verfahren zum Betrieb eines Internet-Portals zur Kaufunterstützung von Kunden, bei welchem der Kunde über die Verfügbarkeit von Produkten an Verkaufstätten informiert wird.

### STAND DER TECHNIK

Für den herkömmlichen Einkauf eines Produkts muss der Kunde u. U. mehrere mögliche Verkaufsstätten aufsuchen, da nicht immer an jeder Verkaufsstätte ein Produkt geführt wird oder ein Bestand des Produkts gegeben ist. Will der Kunde zur Reduktion der für das Aufsuchen mehrerer Verkaufsstätten erforderlichen Wege und/oder der Zeit für den Einkauf gezielt eine Verkaufsstätte aufsuchen, an welcher das Produkt tatsächlich verfügbar ist, muss der Kunde von zu Hause oder über ein Mobiltelefon in mehreren möglichen Verkaufsstätten anrufen und anfragen, ob das Produkt geführt wird und ein Bestand des Produkts gegeben ist. Dies erfordert u. U. mehrere Telefonate sowie das langwierige Herstellen unterschiedlicher Verbindungen mit unterschiedlichen Abteilungen einer Verkaufsstätte - wenn überhaupt Verkaufspersonal telefonisch verfügbar ist.

Zunehmend verdrängt wird dieses klassische Einkaufsverhalten durch das Einkaufen im Internet. Hier zeichnen sich unterschiedliche Trends ab:
a) Verkaufsstätten bieten ein ausschließlich dieser Verkaufsstätte zugeordnetes Internet-Portal an, mit welchem der Kunde nach A-Priori-Auswahl dieser Verkaufsstätte zunächst ein Produkt angeben kann, an welchem der Kunde Interesse hat. Ist dieses Produkt bekannt, wird eine Ausgabe erzeugt, in welcher dem Kunden Informationen zu dem Produkt an sich angeboten werden, der aktuelle Bestand des Produkts ("vier Geräte verfügbar"), eine voraussichtliche Lieferzeit und der Produktpreis angezeigt wird. Der Kunde kann dann über das Internet-Portal nach Eingabe der persönlichen Daten und des Zahlungsmodus die Bestellung aufgeben, die dann über das Internet an den Betreiber des Internet-Portals, insbesondere die Verkaufsstätte, übermittelt wird. Es erfolgt dann ein Versand des Produkts an den Kunden. Ein Beispiel für eine derartige Verkaufsstätte ist das Unternehmen Amazon. Ebenfalls möglich ist, dass datenbasierte Produkte wie Musiktitel, Filme o. ä. auf elektronischem Wege über das Internet an den Kunden geliefert werden.
b) Weiterhin bekannt sind Internet-Portals, die auch als "Preissuchmaschinen" bezeichnet werden. Für derartige Preissuchmaschinen wird ein Produkt abgefragt, an welchem der Kunde Interesse hat. Diese Abfrage erfolgt allerdings nicht an von einem Kunden spezifizierten Verkaufsstätten in Form von stationären Einzelhändlern, sondern vielmehr automatisiert bei einer Vielzahl von E-Commerce-Portalen. Die Preissuchmaschine ermittelt dann für eine Vielzahl derartigen E-Commerce-Portalen die jeweiligen Preise des Produkts. Dem Kunden wird dann eine Liste möglicher E-Commerce-Portalen angezeigt, die nach dem Preis für das Produkt sortiert sind. Die Informationen des Betreibers der Preissuchmaschine hinsichtlich des Angebots des Produkts über die E-Commerce-Portale sowie des Preises basieren auf seitens der E-Commerce-Portale geschalteten Anzeigen in den unterschiedlichen Medien, welche von dem Betreiber der Preissuchmaschine gesammelt werden. Der Kunde kann dann über die Preissuchmaschine eine elektronische Bestellung aufgeben mit Zusendung des Produkts von dem Betreiber des E-Commerce-Portals an den Kunden. Nachteilig ist, dass die Praxis zeigt, dass die von dem Betreiber der Preissuchmaschine genutzten Informationen oftmals nicht dem tatsächlichen Angebot und den Preisen der E-Commerce-Portale entsprechen. Ausfluss dieser unzureichenden Information über die Verfügbarkeit des Produkts ist, dass von derartigen Preissuchmaschinen in der Regel eine so genannte "Ampelanzeige" verwendet wird, die mit den Farben grün (Produkt verfügbar), gelb und rot (Produkt nicht verfügbar) den Anschein erwecken soll, dass exakte Informationen über die Verfügbarkeit des Produkts vorhanden sind. Hier zeigt allerdings die Praxis, dass diese Anzeigen ungenau sind und oftmals nicht zutreffend sind, so dass auch bei der Bestellung eines mit der Farbe grün gekennzeichneten Produkts die Bestellung lange dauert oder überhaupt nicht ausgeführt werden kann. Ebenfalls möglich ist, dass in der Preissuchmaschinen zunächst die Verfügbarkeit mit grün angegeben ist, aber dann von der Preissuchmaschine bei näherem Kaufinteresse unmittelbar auf die verlinkte Website des E-Commerce-Portals oder einer zugeordneten Verkaufsstätte verzweigt wird, auf welcher dann ergänzende Informationen zu der Verfügbarkeit des Produkts angeboten werden.

Vergleicht man die klassischen Einkaufsmöglichkeiten, bei denen der Kunde eine Verkaufsstätte aufsucht, mit einem Einkauf mit den dargestellten Varianten a) und b), so hat der klassische Einkauf den gravierenden Vorteil, dass der Kunde das Produkt noch am selben Tag in den Händen halten kann, während eine Versendung des Produkts für den so genannten E-Commerce mit vorangegangener Verpackung des Produkts mehrere Tage dauern kann oder für eine eilige Übermittlung Zusatzkosten nach sich zieht. Ein weiterer Vorteil ist, dass der Kunde bei dem klassischen Einkauf vor dem Kauf das Produkt begutachten kann und ggf. bei einem Verkaufsberater in der Verkaufsstätte auf Grundlage eines persönlichen Gesprächs Informationen austauschen kann. Nachteilig bei dem klassischen Einkauf sind aber die eingangs erwähnten Probleme bzgl. der Einholung der Information über die Verfügbarkeit des Produkts in den Verkaufsstätten, die als ein Grund für die Abnahme des klassischen Kaufverhaltens anzusehen sind.

### AUFGABE DER ERFINDUNG

Der vorliegenden Erfindung liegt die Aufgabe zugrunde, ein Verfahren zum Betrieb eines Internet-Portals vorzuschlagen, welches eine Unterstützung von Kunden für einen Einkauf eines Produkts bereitstellt, bei dem die Produktübergabe unmittelbar in einer Verkaufsstätte, also nicht über einen Versand, erfolgt und mittels welchem der Kunde auf einfache, automatisierte Weise die für ihn relevanten Informationen erhält.

### LÖSUNG

Die Aufgabe der Erfindung wird erfindungsgemäß gelöst mit den Merkmalen des unabhängigen Patentanspruchs 1. Weitere Ausgestaltungen des erfindungsgemäßen Verfahrens ergeben sich entsprechend den abhängigen Patentansprüchen 2 bis 17.

### BESCHREIBUNG DER ERFINDUNG

Der vorliegenden Erfindung liegt der Gedanke zugrunde, dem Kunden durch Besuch des Internet-Portals unter geringem Aufwand die Informationen zur Verfügung zu stellen, die er benötigt, um mit dem Aufsuchen einer einzigen Verkaufsstätte in seiner möglichst unmittelbaren Umgebung das ihn interessierende Produkt zu begutachten und ggf. zu erwerben. Hierzu wird zunächst über das Internet-Portal ein Produkt abgefragt, an welchem der Kunde ein Interesse hat. Diese Abfrage kann unmittelbar durch Abfrage des Herstellers, der Artikel-Nr., der Marke des Produkts, des Namens des Produkts, eines Titels des Produkts u. ä. erfolgen. Ebenfalls möglich ist, dass eine Gattungsbezeichnung für eine Produktart abgefragt wird und dann dem Kunden eine Vielzahl von möglichen Produkten innerhalb dieser Gattungsbezeichnung angeboten werden, ggf. unter Bereitstellung von Zusatzinformationen zu den Unterschieden zwischen den einzelnen Produkten. Ergebnis der Abfrage eines Produkts kann dann ein eindeutig identifiziertes Produkt sein. Möglich ist auch, dass mehrere die Spezifikationen des Kunden erfüllende Produkte Ergebnis der Abfrage sind.

Weiterhin wird erfindungsgemäß die Position des Kunden ermittelt.

Über das Internet-Portal sind Informationen zu einer Vielzahl von Verkaufsstätten verfügbar, wobei die Vielzahl von Verkaufsstätten voneinander unabhängig sein können oder (zumindest teilweise) Mitglieder von Handelsketten sein können oder unterschiedliche Standorte desselben Unternehmens oder eine Handelskette sein können. Erfindungsgemäß wird aus dieser Vielzahl von Verkaufsstätten mindestens eine Verkaufsstätte ausgewählt. Diese Auswahl erfolgt unter Berücksichtigung der Entfernung der jeweiligen Verkaufsstätte von der ermittelten Position des Kunden. Hierbei kann die genannte Entfernung das einzige Auswahlkriterium sein oder eines von mehreren derartigen Auswahlkriterien. In jedem Fall erfolgt eine Auswahl derart, dass die ausgewählte Verkaufsstätte sich möglichst in der Nähe des Kunden befindet oder zumindest innerhalb dessen Reichweite. Durch die erfindungsgemäße automatisierte Auswahl muss der Kunde nicht selber aus einer Vielzahl von Verkaufsstätten die Verkaufsstätten aus seiner Umgebung ermitteln - vielmehr kann, sofern die Position des Kunden bekannt ist, automatisch eine geeignete Auswahl von Verkaufsstätten erfolgen. Es kann allerdings auch vorkommen, dass Produkte gesucht und gefunden werden, die nicht in der Verkaufsstätte oder dem so genannten Point-of-Sale, kurz "POS", gelistet sind, womit auch nicht die Garantie gegeben werden kann, dass mindestens eine Verkaufsstätte ermittelt wird. Möglich ist, dass für derartige Fälle über das Internet-Portal eine Download-/Bestell-Funktion angeboten wird.

Weiterhin wird erfindungsgemäß ein Bestand des abgefragten Produkts in mindestens einer Verkaufsstätte ermittelt. Hierbei wird nicht ein veralteter Bestand verwendet, sondern ein aktueller Bestand, welcher allenfalls dem Vortag oder Vorabend entspricht oder um Minuten oder wenige Stunden von dem Zeitpunkt der Benutzung des Internet-Portals durch den Kunden abweicht, im Idealfall aber dem tatsächlichen aktuellen Bestand entspricht. Eine derartige Ermittlung des aktuellen Bestands ist möglich, da erfindungsgemäß das Internet-Portal auf ein der Verkaufsstätte zugeordnetes Warenwirtschaftssystem zugreift. Möglich ist hierbei, dass die unterschiedlichen Verkaufsstätten demselben Warenwirtschaftssystem zugeordnet sind, beispielsweise in einer Handelskette oder für den Fall, dass die Verkaufsstätten unterschiedlichen Standorten, aber demselben Unternehmen zugeordnet sind. Erfindungsgemäß kann aber u. U. auch auf mehrere unterschiedlichen Verkaufsstätten zugeordnete, an sich separate Warenwirtschaftssysteme zugegriffen werden, um den aktuellen Bestand des abgefragten Produkts an den unterschiedlichen Verkaufsstätten zu ermitteln.

Schließlich wird erfindungsgemäß eine Ausgabe erzeugt, die abhängig ist sowohl von den ermittelten aktuellen Beständen des Produkts an mindestens einer Verkaufsstätte als auch von der Entfernung von Verkaufsstätten von der ermittelten Position des Kunden. Um lediglich ein einfaches Beispiel zu nennen, kann eine derartige Ausgabe eine Liste beinhalten, in welcher nur die Verkaufsstätten aufgelistet sind, an welchen aktuelle Bestände des Produkts gegeben sind, wobei die einzelnen Verkaufsstätten in dieser Liste sortiert sind nach ihrer Entfernung von der ermittelten Position des Kunden oder nur Verkaufsstätten in einem vorgegebenen Umkreis von der ermittelten Position des Kunden aufgeführt sind. Beliebige Abwandlungen der Berücksichtigung der aktuellen Bestände einerseits und der Entfernung andererseits sind ebenfalls möglich - um hier lediglich ein Beispiel zu nennen, ohne dass auf dieses eine Einschränkung erfolgen soll, kann die Ausgabe auch lediglich von mehreren Verkaufsstätten mit vorhandenem aktuellen Bestand die Verkaufsstätte angeben, die die geringste Entfernung von der ermittelten Position des Kunden hat.

Es ist darauf hinzuweisen, dass die erfindungsgemäßen Merkmale nicht in der in dem Patentanspruch 1 angegebenen zeitlichen Reihenfolge ausgeführt werden müssen. Beispielsweise ist es möglich, dass zuerst Verkaufsstätten in der Nähe der ermittelten Position des Kunden ausgewählt werden und anschließend dann für die derart ausgewählten Verkaufsstätten der aktuelle Bestand bei dem den Verkaufsstätten zugeordneten Warenwirtschaftssystemen angefragt wird. Ebenfalls möglich ist aber die umgekehrte Reihenfolge, in welcher zunächst für eine Vielzahl von Verkaufsstätten der Bestand an den zugeordneten Warenwirtschaftssystemen abgefragt wird und dann für die Verkaufsstätten, an welchen sich eine Verfügbarkeit des Produkts ergeben hat, eine Auswahl von Verkaufsstätten unter Berücksichtigung der Entfernung der Verkaufsstätte von der ermittelten Position des Kunden erfolgt.

Mit der genannten Ausgabe erhält somit der Kunde eine zuverlässige, aktuelle Information, wo das Produkt in seiner Nähe verfügbar ist. Durch die vereinfachte Abfrage in dem Internet-Portal erspart sich der Kunde langwierige Telefonate mit möglichen Verkaufsstätten, lange Wege zu mehreren aufzusuchenden Verkaufsstätten u. ä. Vielmehr kann der Kunde unmittelbar die sich aus der Ausgabe ergebende nächste Verkaufsstätte aufsuchen, wo gesichert auch das Produkt im Bestand ist.

Für die erfindungsgemäße Ermittlung der Position des Kunden gibt es vielfältige Möglichkeiten. Beispielsweise kann der Kunde das Internet-Portal als definierter Benutzer verwenden, wobei der Kunde das Internet-Portal über ein geschütztes Passwort betreten kann. In diesem Fall ist dem Kunden bereits ein Standort bzw. eine Position zugeordnet, beispielsweise über die hinterlegte Adresse des Kunden, eine Postleitzahl des Kunden und/oder die Angabe eines bevorzugten Einkaufsorts des Kunden.

Entsprechend einer weiteren erfindungsgemäßen Ausführungsform kann in dem erfindungsgemäßen Verfahren eine Ermittlung der Position des Kunden über eine Abfrage an den Kunden, beispielsweise eine Abfrage der Adresse und/oder der Postleitzahl, erfolgen. In weiterer alternativer oder kumulativer Ausführungsform kann ein Rechner, beispielsweise ein mobiles Endgerät, dessen sich der Kunde bedient, mit einem GPS-Sensor ausgestattet sein, so dass die Position des Kunden über den GPS-Sensor abgefragt werden kann oder worden sein kann.

Gemäß einer besonderen Ausführungsform der Erfindung wird die Position des Kunden automatisiert über eine IP-Adresse, welcher sich der Kunde unmittelbar oder mittelbar bedient, ermittelt. Insbesondere handelt es sich hierbei um die IP-Adresse des Rechners des Kunden selbst oder eines Providers, dessen sich der Kunde als nächster "Knotenpunkt" des Netzwerkes bedient.

Aus obigen Ausführungen ist ersichtlich, dass es nicht zwingend erforderlich ist, die exakte Position des Kunden in Erfahrung zu bringen. Vielmehr kann es ausreichend sein, wenn diese Information bis auf wenige 100 Meter, wenige Kilometer ungenau bekannt ist oder lediglich eine Stadt bekannt ist, welche sich in der Nähe des Kunden befindet.

Gemäß einer weiteren erfindungsgemäßen Ausgestaltungsform kann eine Reservierung oder Bestellung des Produkts oder einer Produktliste bei einer Verkaufsstätte über das Internet-Portal erzeugt werden. Hierbei erfolgt die Reservierung oder Bestellung auf Grundlage der erzeugten Ausgabe in Kenntnis, dass ein Bestand des Produkts bei der Verkaufsstätte gegeben ist, an welche die Reservierung oder Bestellung adressiert wird. Darüber hinaus wird auch hinsichtlich der Reservierung oder Bestellung des Produkts auf das Warenwirtschaftssystem der Verkaufsstätte zugegriffen, indem in diesem unmittelbar die Bestellung oder Reservierung berücksichtigt werden kann. Bei einer verbindlichen Bestellung kann der Bestand in dem Warenwirtschaftssystem bereits mit der Bestellung reduziert werden. Für die Übermittlung einer Reservierung kann der Bestand des Warenwirtschaftssystems unter Berücksichtigung eines Vorbehalts reduziert werden oder es kann angegeben werden, dass für eine Zahl Y des Produkts eine Reservierung vorliegt.

Möglich ist, dass sich der Kunde nach der Information, Reservierung oder Bestellung in die Verkaufsstätte begibt, wo dieser dann durch Aufsuchen des entsprechenden Warenstandorts, für welchen dem Kunden bereits über das Internet-Portal der relevante Ort genannt sein kann, das Produkt in Augenschein nehmen und ggf. kaufen kann.

Handelt es sich hierbei um ein sehr spezielles Produkt, für welches beispielsweise der Kunde auf dem Weg zur Verkaufsstätte die exakte Produktkennzeichnung vergessen kann, oder möchte der Kunde an der Verkaufsstätte mehrere Produkte erwerben und besteht die Gefahr, dass der Kunde von diesen mehreren Produkten einzelne vergisst, ist es vorteilhaft, wenn von dem Kunden in einer weiteren Ausführungsform des erfindungsgemäßen Verfahrens eine Produktliste erzeugt wird, welche ein oder mehrere Produkte beinhaltet. Eine derartige Produktliste wird dann automatisiert auf Knopfdruck des Kunden über das Internet an die ermittelte Verkaufsstätte übertragen. Der Kunde muss dann nicht einen "Einkaufszettel" in die Verkaufsstätte mitnehmen. Vielmehr kann der Kunde die zuvor übertragene Produktliste in der Verkaufsstätte über einen Terminal abrufen. Durchaus denkbar ist allerdings auch, dass der Kunde selber lediglich die Produktliste erzeugt und veranlasst, dass die Produktliste an die Verkaufsstätte übertragen wird. Beispielsweise kann dann in der Verkaufsstätte kann das Personal auf Anfrage des Kunden oder einer mit dem Einkauf beauftragten Person die Produktliste abgerufen und dem Kunden oder der mit dem Kauf beauftragten Person aushändigen und verkaufen. Ebenfalls möglich ist, dass in der Verkaufsstätte mit Übertragung der Produktliste, insbesondere bei verbindlicher Bestellung, vom Personal bereits das Produkt herausgesucht wird oder die Produkte herausgesucht werden und in einen Übergabebereich verbracht werden, beispielsweise im Bereich einer Kasse, wo dann das mindestens eine Produkt vom Kunden abgeholt werden kann. Auch möglich ist, dass der Kunde beispielsweise eine Wunschliste als Produktliste erstellt, bei der es sich beispielsweise um eine Liste für Geburtstags- oder Hochzeitsgeschenke handeln kann. Der Kunde kann dann mögliche Schenker darüber informieren, dass in der Verkaufsstätte an einem Terminal die Produktliste abrufbar ist, so dass die Schenker dann die vorgewählten Produkte erwerben können.

Nach Erzeugung der Produktliste durch den Kunden kann auch aus der erzeugten Produktliste eine physikalische Ausgabe erzeugt werden. Um lediglich ein einfaches Beispiel zu nennen, kann die physikalische Ausgabe in einem Ausdruck bestehen, in welchem eine Nummer der Produktliste (bspw. "Nr. 1 001 ") aufgedruckt ist. Mit dieser physikalischen Ausgabe begibt sich dann der Kunde in die Verkaufsstätte, wo die physikalische Ausgabe beispielsweise einem Verkäufer ausgehändigt wird, der dann die Produkte heraussucht und dem Kunden übergibt und verkauft. Ebenfalls möglich ist, dass an einem Terminal im Bereich einer Verkaufsstätte anhand der physikalischen Ausgabe die Produktliste automatisiert erneut erzeugt wird.

Für eine besondere Ausführungsform besteht die physikalische Ausgabe in einem Barcode. Ein derartiger Barcode kann von einem Barcode-Scanner erfasst werden, der einem Terminal in einer Verkaufsstätte zugeordnet ist. Über derartige Barcodes kann eine Vielzahl von Informationen übertragen werden wie Artikel-Nummern, die Anzahl der zu kaufenden Produkte usw.

Während es in vielen Fällen ausreichend ist, eine Produktliste zu erzeugen, ist es gemäß einem weiteren erfindungsgemäßen Vorschlag möglich, dass mehrere Teilproduktlisten erzeugt werden. Die einzelnen Teilproduktlisten können sich hierbei beispielsweise darin unterscheiden, in welcher Verkaufsstätte ein Produkt gekauft werden soll, in welcher Preisklasse ein Produkt liegt, wie dringlich der Kauf des Produkts ist (Teilproduktlisten "unbedingt kaufen", "eventuell kaufen"), für welchen Schenker die Teilproduktliste bestimmt ist u. ä.

In weiterer Ausgestaltung der Erfindung können Produktlisten oder Teilproduktlisten an einem Terminal in einer Verkaufsstätte durch das Bedienpersonal oder den Kunden verändert werden. Beispielsweise kann der Kunde an einem Terminal ein Produkt von der Produktliste streichen, für welches die Kaufabsicht, insbesondere nach Inaugenscheinnahme des Produkts, nicht mehr gegeben ist. Ebenfalls möglich ist, dass an dem Terminal ein Produkt aus der Produktliste gestrichen wird, welches von einem Kunden oder einem Schenker bereits gekauft worden ist.

Für den Fall, dass eine Produktliste mit mehreren Produkten besteht, kann sich die Problemstellung ergeben, dass Verkaufsstätten existieren, an welchen lediglich ein Teil der Produkte der Produktliste verfügbar sind. In diesem Fall ist von Vorteil, wenn mittels des erfindungsgemäßen Verfahrens eine Ausgabe erzeugt wird, die nicht nur von den ermittelten aktuellen Beständen der Produkte an Verkaufsstätten abhängig ist und von der Entfernung von Verkaufsstätten von der ermittelten Position des Kunden abhängig ist. Vielmehr sollte dann eine Ausgabe erzeugt werden, die (auch) davon abhängig ist, für wie viele Produkte der Produktliste an einer Verkaufsstätte ein Bestand vorhanden ist.

Eine weitere erfindungsgemäße Ausgestaltung widmet sich den "Vorlieben" des Kunden für einzelne Verkaufsstätten. Diesen Vorlieben wird bei dem erfindungsgemäßen Verfahren dadurch Rechnung getragen, dass für einen Kunden über einen Auswertezeitraum erfasst wird, an welchen Verkaufsstätten dieser Kunde Produkte kauft. In diesem Fall berücksichtigt die Ausgabe des Internet-Portals zusätzlich, an welchen Verkaufsstätten und/oder in welchem Umfang der Kunde in dem Auswertezeitraum Produkte gekauft hat. Sind beispielsweise an mehreren Verkaufsstätten in der Umgebung der ermittelten Position des Kunden die Produkte verfügbar, wird dem Kunden vorrangig eine Verkaufsstätte zur Kenntnis gebracht, in welcher dieser Kunde in der Vergangenheit bevorzugt Produkte gekauft hat.

Ein weiterer Aspekt der Erfindung widmet sich der Problemstellung, dass es sein kann, dass für den Zeitpunkt der Abfrage durch den Kunden in dem Internet-Portal u. U. tatsächlich ein Bestand des Produkts an einer Verkaufsstätte > 0 existiert, aber in der Zwischenzeit, bis der Kunde die Verkaufsstätte aufsuchen kann, der Bestand auf 0 reduziert sein könnte, so dass der Kunde die Verkaufsstätte umsonst aufsuchen würde. Für die Vermeidung derartiger Probleme schlägt die Erfindung vor, dass in der Ausgabe für den Kunden berücksichtigt wird, ob der Bestand der Produkte an einer Verkaufsstätte größer ist als ein Schwellwert, beispielsweise ob in der Verkaufsstätte mehr als 2, 5 oder 35 Produkte vorhanden sind. Liegt der Bestand der Produkte unterhalb dieses Schwellwerts, wird vorzugsweise diese Verkaufsstätte in der Ausgabe nicht genannt. Möglich ist auch, dass dem Kunden automatisiert eine Mitteilung an ein zuvor von dem Kunden spezifiziertes mobiles Endgerät gesendet wird, wenn ein zuvor ausgewiesener Bestand in einer Verkaufsstätte nicht mehr gegeben ist oder einen Schwellwert unterschreitet.

Möglich ist weiterhin im Rahmen der vorliegenden Erfindung, dass die Ausgabe nicht auf einer einzigen Abfrage auf dem Warenwirtschaftssystem beruht, sondern für eine länger an dem Bildschirm des Kunden angezeigte Ausgabe eine Aktualisierung erfolgt, wenn ein aktueller Bestand des Produkts an einer Verkaufsstätte reduziert wird. Entsprechend möglich ist, dass eine Korrektur des Bestands nach oben erfolgt, wenn an der Verkaufsstätte zusätzliche Produkte eintreffen.

Für eine verbesserte Ausgabe kann in einer weiteren Ausgestaltung des erfindungsgemäßen Verfahrens eine Verfügbarkeitsprognose für die Zukunft erstellt werden. Hier wird auf Grundlage des Warenwirtschaftssystems abgeschätzt, wie der Bestandsverlauf in den nächsten Stunden, Tagen und Wochen aller Voraussicht nach sein wird. Um lediglich ein einfaches Beispiel zu nennen, welches nicht beschränkend sein soll, könnte ein Mittelwert ermittelt werden, dass durchschnittlich in einem Auswertezeitraum jeden Tag zwei Produkte verkauft werden. Ergibt sich ein Bestand von zehn Produkten an der Verkaufsstätte, ist somit sehr wahrscheinlich, dass in ca. fünf Tagen kein Bestand des Produkts mehr an der Verkaufsstätte gegeben sein wird. In diesem Fall könnte dem Kunden über das Internet-Portal signalisiert werden, dass der Bestand des Produkts an der Verkaufsstätte gesichert ist, aber eine Verfügbarkeit aller Voraussicht nach nur noch für fünf Tage gegeben ist. Ist hingegen ein Verkauf von zwei Produkten in zehn Minuten durchschnittlich der Fall, wäre ein Bestand lediglich für die nächsten 50 Minuten gegeben. In diesem Fall kann u. U. auf Grundlage der Verfügbarkeitsprognose eine Ausgabe erzeugt werden, in welcher diese Verkaufsstätte überhaupt nicht genannt wird, da unwahrscheinlich ist, dass der Kunde innerhalb von 50 Minuten die Verkaufsstätte aufsucht. Ebenfalls möglich ist, dass hier eine Prognose erstellt wird, wie schnell sich der Kunde zu der Verkaufsstätte bewegen kann. Ist wahrscheinlich, dass der Kunde innerhalb der nächsten 50 Minuten in der Verkaufsstätte eintrifft, kann in der Ausgabe diese Verkaufsstätte durchaus erwähnt werden.

Ebenfalls berücksichtigt werden kann in einer derartigen Verfügbarkeitsprognose die beispielsweise dem Warenwirtschaftssystem entstammende Information, dass zukünftig weitere Produkte infolge einer Lieferung eintreffen werden. Auch berücksichtigt werden können über den Tagesverlauf variable, über die Woche variable, saisonabhängig variable unterschiedliche Absatzvolumina für das Produkt.

Ebenfalls möglich ist, dass für das erfindungsgemäße Verfahren die Ausgabe eine Information dahingehend enthält, ob und/oder in welchem Umfang eine zukünftige Veränderung des Bestands an eine Verkaufsstätte erfolgen wird oder wahrscheinlich ist. Dies beinhaltet beispielsweise eine Ankündigung über das erwartete zukünftige Eintreffen einer Lieferung.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.

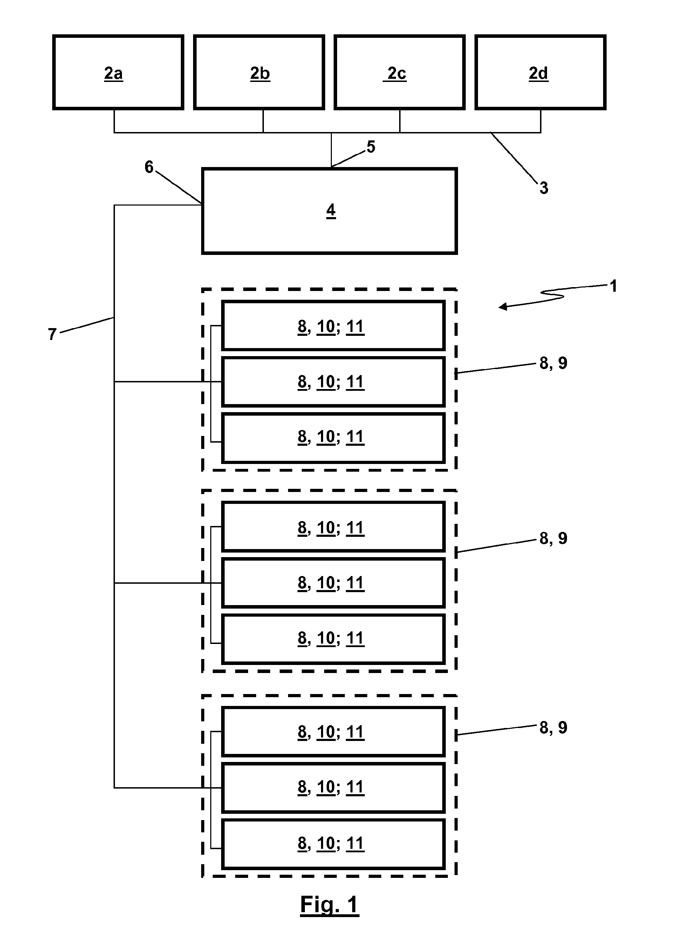

- **Fig. 1**: zeigt ein schematisches Blockschaltbild eines Netzwerks, innerhalb dessen das erfindungsgemäße Verfahren ausgeführt werden kann.

### FIGURENBESCHREIBUNG

**Fig. 1** zeigt ein Netzwerk 1, in welches Rechner 2a, 2b, 2c, 2d integriert sind. Diese Rechner 2 sind Kunden zugeordnet, so dass der Kunde über die Rechner 2 mit dem Netzwerk kommunizieren kann. Bei den Rechnern 2 kann es sich beispielsweise um einen PC oder ein mobiles Endgerät oder ein Mobiltelefon mit einem Internet-Zugang handeln. Insbesondere erfolgt über die Rechner 2 eine Kommunikation mit dem Internet-Portal. Die Rechner sind für die Kommunikation sowie die Erzeugung der Ausgabe des Internet-Portals mit geeigneten Eingabeeinheiten wie Tastaturen, Ausgabeeinheiten wie Bildschirmen, Druckern, Datenspeichereinheiten wie Festspeicherlaufwerke ausgestattet. Die Rechner 2 sind über Leitungsverbindungen 3, hier das Internet, mit einem Server 4 verbunden, welcher für die eigentliche Durchführung des erfindungsgemäßen Verfahrens zuständig ist. Der Server 4 besitzt eine Schnittstelle 5, über welche dieser mit den Rechnern 2 kommunizieren kann.

Über die Schnittstelle 5 erfolgt mit den Rechnern 2 insbesondere ein Datenaustausch im Rahmen der folgenden Verfahrensschritte:
- Erzeugung einer Ausgabe bei den Rechnern 2 für das Internet-Portal;
- Abfrage eines Produkts an welchem der Kunde ein Interesse hat;
- Ermitteln der Position des Kunden, insbesondere durch Empfang von Daten bezüglich der Position des Kunden, welche dem Rechner 2 entstammen, beispielsweise auf Grundlage der IP-Adresse, eines GPS-Sensors des Rechners 2 oder durch Eingabe von Adresse und/oder Postleitzahl am Rechner 2 durch den Kunden;
- Erzeugen einer Ausgabe, die insbesondere von ermittelten aktuellen Beständen des abgefragten Produkts an mindestens einer Verkaufsstätte und der Entfernung von Verkaufsstätten von der ermittelten Position des Kunden abhängig ist. Diese Ausgabe wird insbesondere dadurch erzeugt, dass geeignete Daten über die Schnittstelle 5 an den Rechner 2 versendet werden, wo dann die Ausgabe beispielsweise auf einem Bildschirm angezeigt werden kann;
- Empfang von Daten hinsichtlich einer Reservierung oder Bestellung eines Produkts oder einer Produktliste;
- Übermittlung von Daten an einen Rechner 2, die eine physikalische Ausgabe von Produkten oder Produktlisten betreffen, wobei die physikalische Ausgabe dann an dem Rechner ausgegeben werden kann - beispielsweise handelt es sich um Daten betreffend eines Barcodes, welcher an dem Rechner 2 ausgedruckt werden kann.

Des Weiteren besitzt der Server 4 eine Schnittstelle 6, über welche der Server 4 über Leitungsverbindungen 7, insbesondere das Internet, mit Verkaufsstätten 8 kommunizieren kann. Bei derartigen Verkaufsstätten 8 kann es sich um die in Fig. 1 gestrichelt dargestellten Handelsketten 9 handeln, in welchen unterschiedliche Handelsunternehmen 10 oder Standorte 11 desselben Handelsunternehmens zusammengefasst sind. Ebenfalls möglich ist, dass es sich bei einer Verkaufsstätte 8 um eine unabhängige Verkaufsstätte handelt.

Den Verkaufsstätten 8 ist jeweils einzeln oder mehreren Verkaufsstätten ist gemeinsam ein Warenwirtschaftssystem zugeordnet, bei welchem es sich um ein computergestütztes Netzwerk mit Software handelt einschließlich einer Funktion, über welche die Warenströme in der einzelnen Verkaufsstätte 8 oder mehreren zusammengefassten Verkaufsstätten 8 aktuell erfasst und abgebildet werden. Die Software des Warenwirtschaftssystems umfasst permanent oder flüchtig gespeicherte Daten zu Beständen. Für ein Warenwirtschaftssystem, welches einer einzigen Verkaufsstätte 8 zugeordnet ist, betreffen diese Bestände diese einzige Verkaufsstätte. Für den Fall, dass ein Warenwirtschaftssystem für mehrere Verkaufsstätten 8 zuständig ist, werden vorzugsweise die Bestände für die jeweiligen Verkaufsstätten 8 einzeln geführt. Für eine Handelskette 9 kann ein zentrales Warenwirtschaftssystem zum Einsatz kommen, welches aber dann die Bestände der einzelnen zugeordneten Handelsunternehmen 10 und/oder Standorte 11 einzeln berücksichtigt. Die Bestände werden aktuell gehalten, indem die Übergabe von Waren an einen Käufer in den Verkaufsstätten 8 aktuell in dem Warenwirtschaftssystem berücksichtigt wird. Beispielsweise kann das Produkt an der Kasse der Verkaufsstätte 8 erfasst werden. Kommuniziert die Kasse mit dem Warenwirtschaftssystem, kann mit dem Verkauf eines Produktes an der Verkaufsstätte 8 der Bestand an dieser Verkaufsstätte 8 um die Zahl 1 in dem Warenwirtschaftssystem reduziert werden. Das Warenwirtschaftssystem kommuniziert beispielsweise mit einer Kassenschnittstelle, aber auch mit der Leitungsverbindung 7 sowie der Schnittstelle 6 zu dem Server 4 über geeignete, u. U. standardisierte Schnittstellen, insbesondere Edifact, Datanorm, GAEB, DATEV, VDA, XML, CSV. Ein derartiges Warenwirtschaftssystem kann als offenes, geschlossenes und integriertes Warenwirtschaftssystem ausgebildet sein, wobei dieses insbesondere ein Wareneingangsmodul, ein Warenausgangsmodul, ein Dispositions- und Bestellwesenmodul, eine Ausgabe von Dispositionshilfen und Bestellvorschlägen, Bestellbeschreibungen und/oder Überwachungs-und Marketing-Management-Informationsmodule besitzt - fehlen einzelne der vorgenannten Module, handelt es sich um ein offenes Warenwirtschaftssystem. Ein integriertes Warenwirtschaftssystem hingegen findet dann Anwendung, wenn alle obig genannten Module vorhanden sind und zusätzlich noch Verbindungen nach außen bestehen, nämlich im vorliegenden Fall über die Leitungsverbindung 7 mit der Schnittstelle 6 des Servers 4. In dem Warenwirtschaftssystem greift eine Anwendungssoftware auf eine Datenbank zurück, die Stammdaten und Bewegungsdaten mit folgender Datenbankstruktur verwaltet: Stammdaten sind die in Datensätzen verwalteten Objekte, vor allem Kunden, Lieferanten, Waren oder Produkte und Stücklisten. Bezogen auf diese werden die Bewegungsdaten, die verwalteten wirtschaftlichen Transaktionen in Form von Geld und Waren usw. in eigenen Datensätzen erfasst. Unter einem Warenwirtschaftssystem im Rahmen der vorliegenden Erfindung wird auch ein so genanntes "Enterprise Resource Planning-System" verstanden.

Über die Schnittstelle 6 erfolgt im Rahmen des erfindungsgemäßen Verfahrens insbesondere ein Datenaustausch im Rahmen der folgenden Verfahrensschritte:
- Ermitteln eines aktuellen Bestands eines abgefragten Produkts in mindestens einer Verkaufsstätte 8 unter Zugriff auf ein der Verkaufsstätte 8 zugeordnetes Warenwirtschaftssystem - hier kann von dem Server 4 über die Schnittstelle 6 konkret eine Anfrage an eine spezifische Verkaufsstätte 8 nach dem aktuellen Bestand unter Zugriff auf das zugeordnete Warenwirtschaftssystem gerichtet werden oder es wird an mehrere Verkaufsstätten 8, die nach Kriterien ausgewählt sind wie Zugehörigkeit zu einer Handelskette 9, sachliche Zugehörigkeit wie bspw. "Elektronikmarkt" oder lediglich Verkaufsstätten 8 in der Umgebung der ermittelten Position des Kunden u. ä., angefragt oder es werden sämtliche Verkaufsstätten 8 angefragt, wobei über die Schnittstelle 6 und zugeordnete Leitungsverbindung 7 mit mehreren unterschiedlichen, ansonsten nicht miteinander zusammenarbeitenden Warenwirtschaftssystemen kommuniziert werden kann. Von den abgefragten Warenwirtschaftssystemen wird dann über die Leitungsverbindung 7 und Schnittstelle 6 dem Server der Bestand in Form von entsprechenden Daten übermittelt;
- Weiterhin kann über die Schnittstelle 6 eine Reservierung oder eine Bestellung eines Produkts oder einer Produktliste, welche an dem Rechner 2 vorgenommen worden ist, von dem Server 4 an eine ausgewählte Verkaufsstätte 8 übermittelt werden;
- Über die Schnittstelle 6 können Produktlisten oder Produkte übermittelt werden an ausgewählte Verkaufsstätten 8, wo diese dann beispielsweise von einem Kunden, mit dem Kunden verbundenen Personen oder Personal der Verkaufsstätte abgerufen werden können.
- Ebenfalls möglich ist, dass über die Schnittstelle 6 über den Kunden, dessen Kaufverhalten oder ergänzende Informationen an die Verkaufsstätte 8 oder das Warenwirtschaftssystem übermittelt werden, sofern derartige Informationen für die Verkaufsstätte 8 von Interesse sind;
- Liegen umgekehrt in der Verkaufsstätte 8 Informationen zu dem Kunden, beispielsweise zu einem Kaufverhalten oder einer Kreditwürdigkeit desselben, vor, kann über die Leitungsverbindung 7 und die Schnittstelle 6 eine Übermittlung von Daten hinsichtlich dieser Informationen an den Server 4 erfolgen.
- Ebenfalls möglich ist, dass über die Schnittstelle 4 von der Verkaufsstätte 8 bzw. dem Warenwirtschaftssystem Daten übermittelt werden, welche nicht nur den aktuellen Bestand betreffen, sondern die zukünftige Entwicklung des Bestands betreffen. Hierbei kann bereits von dem Warenwirtschaftssystem eine Verfügbarkeitsprognose für die Zukunft erstellt sein, die dann über geeignete Daten über die Schnittstelle 6 an den Server 4 übermittelt werden. Ebenfalls möglich ist, dass lediglich Daten über die Schnittstelle 6 zum Server 4 übertragen werden, auf Grundlage derer dann in dem Server 4 eine Verfügbarkeitsprognose bzw. eine Entwicklung des Bestands für die Zukunft ermittelt wird.
- Ebenfalls von den Verkaufsstätten 8 über die Schnittstelle 6 übertragen werden können Daten hinsichtlich etwaigen Nachlieferungen oder Wiederbefüllungen der Bestände, beispielsweise Nachliefertermine und Stückzahlen für eine derartige Nachlieferung.

In den Verkaufsstätten 8 erfolgt zunächst eine Wechselwirkung von bereits zuvor erwähnten Kassensystemen mit dem Warenwirtschaftssystem, um bei einem Verkauf eines Produktes die Bestandsdaten aktualisieren zu können. Weiterhin sind, beispielsweise im räumlichen Umgebungsbereich der Kassensysteme oder separat von diesen oder an gut für den Kunden zugänglichen Orten, im Bereich der Verkaufsstätten 8 Terminals vorgesehen, die mit dem Warenwirtschaftssystem und/oder dem Server 4 vernetzt sind und kommunizieren können.

Derartige Terminals können zur Ausführung insbesondere der folgenden Verfahrensschritte des erfindungsgemäßen Verfahrens genutzt werden:
- An dem Terminal können Produktlisten abgerufen werden, welche der Kunde erstellt hat und ein Rechner 2 über den Server 4 an die Verkaufsstätte übertragen hat. Hierbei kann die Abfrage durch den Kunden, mit dem Kunden verbundene Personen wie Schenker und/oder Personal des Handelsunternehmens erfolgen.
- Weiterhin kann eine von dem Kunden im Bereich seines Rechners 2 erzeugte physikalische Ausgabe im Bereich des Terminals erkannt werden, womit dann eine Produktliste an dem Terminal wiederhergestellt werden kann, die nicht zuvor elektronisch vom Rechner 2 über den Server 4 zu der Verkaufsstätte 8 übertragen worden ist. Hierzu kann das Terminal mit einem Erfassungsorgan, insbesondere einem Barcode-Scanner, ausgestattet sein, um eine physikalische Ausgabe in Form eines Barcodes zu erkennen. Beliebige anderweitige Lesegeräte, eine Chipkarte o. ä. können ebenfalls Einsatz finden.
- Möglich ist, dass Teilproduktlisten oder Produktlisten an dem Terminal in der Verkaufsstätte verändert werden können. Beispielsweise kann ein Kunde ein Produkt aus einer Produktliste streichen, wenn abweichend zu der ursprünglichen Erstellung der Produktliste der Erwerb des Produkts nicht mehr erwünscht sein sollte. Ebenfalls möglich ist die Hinzufügung weiterer Produkte zu der Produktliste an dem Terminal in der Verkaufsstätte, wozu unter Umständen der Kunde auch von dem Kunden das Internet-Portal anwählen kann.

Vorzugsweise erfolgt allerdings eine Löschung eines Produkts aus einer Produktliste automatisiert für den Fall, dass ein Kassensystem erkennt, dass der Kunde ein Produkt aus der Produktliste erworben hat. Hierzu kann es erforderlich sein, dass eine Spezifikation zu dem Kunden, beispielsweise dessen Name oder eine Kennzahl oder ein Benutzername mit Passwort in das Kassensystem eingegeben wird.

Auf dem Server 4 ist eine Software geeignet ausgebildet, um die zuvor erläuterten Datenflüsse über die Schnittstellen 5, 6 zu steuern und um insbesondere die folgenden Verfahrensschritte auszuführen:
- Liegt eine ermittelte Position des Kunden vor, ermittelt die Software den Abstand von mehreren oder sämtlichen Verkaufsstätten, deren Position bspw. aus einer Datenbank bekannt ist, von der ermittelten Position. Insbesondere ermittelt die Software die Verkaufsstätten 8, die den geringsten Abstand von der ermittelten Position des Kunden besitzen.
- Die Software erzeugt eine Ausgabe, die von den ermittelten aktuellen Beständen des Produkts an mindestens einer Verkaufsstätte 8 und der Entfernung von Verkaufsstätten 8 von der ermittelten Position des Kunden abhängig ist. Beispielsweise sortiert die Software die Verkaufsstätten nach deren Entfernung von der ermittelten Position mit gleichzeitiger Berücksichtigung lediglich der Verkaufsstätten, für die ein aktueller Bestand des Produkts gegeben ist. Hierauf aufbauend erzeugt die Software eine geeignete Ausgabe für den Rechner 2, um das Ergebnis dem Kunden aufbereitet zur Kenntnis zu bringen, beispielsweise mit einer Liste der Verkaufsstätten mit einem Bestand sortiert nach deren Abstand von der ermittelten Position des Kunden.
- Möglich ist, dass die Software unter Verwendung von über die Schnittstelle 5 empfangenen Daten der Rechner 2 die Position des Kunden ermittelt, indem beispielsweise unter Zugriff auf entsprechende Datenbanken eine ermittelte IP-Adresse des Rechners 2 umgewandelt wird in eine Adresse oder eine geodätische Position, Daten eines GPS-Sensors eines Rechners 2 des Kunden ausgewertet werden oder eine ermittelte Postleitzahl oder eine Adresse umgewandelt wird in eine flächige, räumliche oder geodätische Position.
- Weiterhin kann die Software die Entfernung der ermittelten Position von einer Verkaufsstätte berechnen, beispielsweise unter Berechnung der Entfernung "Luftlinie" oder unter Einsatz einer Art Navigationssystem, in welchem aktuell vorhandene Straßen zwischen der ermittelten Position des Kunden und der Verkaufsstätte bestimmt werden und ein kürzester oder schnellster Weg mit der zurückzulegenden Entfernung ermittelt wird.
- Weiterhin kann die Software Informationen zu dem Kunden sammeln, insbesondere zu dessen Kaufverhalten, Kaufgewohnheiten, bevorzugten Produkte, Kaufsegmenten hinsichtlich Exklusivität und Preislage u. ä. Hierzu kann die Software mit einer permanenten Speichereinheit kommunizieren, in welcher für einzelne Kunden entsprechende Daten hinsichtlich getätigter Käufe abgelegt werden, die dann zu einem späteren Zeitpunkt bei einer weiteren Abfrage, Bestellung und/oder Reservierung eines Produkts von der Software wieder abgerufen werden und für das Internet-Portal berücksichtigt werden.
- Ebenfalls gespeichert werden kann über die Software, bei welchen Verkaufsstätten 8 der Kunde bevorzugt einkauft. Dies kann abgeleitet werden über Informationen über die Schnittstelle 5, über welche der Kunde eine Auswahl einer Verkaufsstätte 8 für eine Reservierung oder Bestellung trifft. Ebenfalls möglich ist, dass über die Schnittstelle 6 von einer Verkaufsstätte 8 der Software mitgeteilt wird, in welcher Verkaufsstätte 8 ein Kauf eines Produkts durch den Kunden erfolgt ist. Derartige Informationen werden dann über einen Zeitraum gesammelt, gespeichert und dann ausgewertet zur Bestimmung der Vorlieben eines Kunden für eine Verkaufsstätte.
- Weiterhin kann die Software die Übergabe von Produktlisten oder Teilproduktlisten von dem Rechner 2 zu mindestens einer Verkaufsstätte 8 steuern.
- Möglich ist weiterhin, dass über die Software eine Bewertung der ermittelten Bestände erfolgt und je nach Größe des Bestands eine Modifikation der für den Kunden erzeugten Ausgabe erfolgt. Beispielsweise kann ein Vergleich des Bestands des Produkts an eine Verkaufsstätte 8 mit einem Schwellwert erfolgen ("Berücksichtigung in der Ausgabe nur, wenn mehr als 10 Produkte im Bestand sind").
- Weiterhin kann über die Software eine Aktualisierung einer Ausgabe bei dem Kunden erfolgen, wenn die Software über die Schnittstelle 6 Informationen erhält, dass in einem Warenwirtschaftssystem einer Verkaufsstätte 8 durch einen Verkauf eines Artikels oder durch Nachlieferung der Bestand verringert oder erhöht ist.
- Möglich ist, dass über die Software eine Verfügbarkeitsprognose für den Bestand für die Zukunft erstellt wird und/oder Informationen berücksichtigt werden, ob mit einer Lieferung weiterer Produkte zu rechnen ist.

Im Folgenden wird ein mögliches erfindungsgemäßes Verfahren mit den einzelnen Verfahrensschritten beschrieben, die optional, alternativ oder kumulativ und in beliebiger Reihenfolge verwirklicht sein können:
- Zunächst ruft ein Kunde an seinem Rechner 2 das Internet-Portal auf, womit über die Software des Servers 4 an dem Rechner 2 eine entsprechende Ausgabe erzeugt wird;
- Über das Internet-Portal wird am Rechner 2 des Kunden dann beispielsweise ein Produkt abgefragt, mit dessen Kauf sich der Kunde beschäftigt;
- Ist der Software des Servers 4 dieses Produkt bekannt, fragt die Software über die Schnittstelle 6 bei Verkaufsstätten 8 an, ob dieses Produkt verfügbar ist und ggf. wie groß der Bestand dieses Produkts in der Verkaufsstätte 8 ist. Als Ergebnis dieser Anfragen gehen der Software des Servers 4 über die Schnittstelle 6 Informationen von einem oder mehreren Warenwirtschaftssystem(en) zu (bspw. "drei Produkte an einer Verkaufsstätte 8 mit Standort X vorhanden", "vier Produkte an einer Verkaufsstätte 8 mit Standort Y vorhanden") usw.;
- Die Software 4 ermittelt eine Position des Kunden bzw. des Rechners 2;
- Auf Grundlage der zuvor ermittelten Standorte X, Y der Verkaufsstätten 8 sowie der ermittelten Position des Kunden ermittelt die Software des Servers 4 die jeweils den Verkaufsstätten 8 zugeordneten Entfernungen zwischen der ermittelten Position des Kunden und der jeweiligen Verkaufsstätte;
- Über die Software können ergänzend Informationen zu dem Produkt wie Hintergrundinformationen, technische Daten, Preis, Gewicht, Testberichte u. ä., Auszüge aus Produkten wie Filme oder Musik empfangen oder aus einer Datenbank ausgelesen werden, wobei bei dem Kunden an dem Rechner 2 eine entsprechende Ausgabe unter Vermittlung durch die Software des Servers 4 erzeugt wird;
- Der Kunde kann gefragt werden, ob dieser bereits ein Nutzerkontingent besitzt oder ein entsprechendes Nutzerkontingent eröffnen will. Die zuvor erwähnte Ermittlung der Position des Kunden kann dann aus einem eingegebenen oder bereits vorhandenen Nutzerkontingent abgeleitet werden;
- Bei dem Kunden wird von der Software des Servers 4 die Ausgabe erzeugt, in welcher die Verkaufsstätten 8, die einen Bestand des Produkts besitzen, nach ihrer Entfernung von der ermittelten Position des Kunden sortiert sind. Ergänzend oder alternativ kann eine Sortierung der Verkaufsstätten nach dem angebotenen Preis erfolgen;
- Im Anschluss hieran hat der Kunde die Möglichkeit, über das Internet-Portal ein Produkt bei einer der angegebenen Verkaufsstätten 8 auszuwählen und dieses zu reservieren (bspw. für eine begrenzte Zeitspanne) oder bereits verbindlich zu bestellen. Dies erfolgt unter Vermittlung der Software des Servers 4;
- Die Bestellung oder Reservierung wird über die Software an die Verkaufsstätte 8 bzw. das zugeordnete Warenwirtschaftssystem übermittelt, in welchem insbesondere für den Fall einer verbindlichen Bestellung der Bestand um die Zahl 1 für das jeweilige Produkt reduziert wird;
- Ebenfalls möglich ist, dass mit der Reservierung oder Bestellung bereits ein Mitarbeiter der Verkaufsstätte 8 die reservierten oder bestellten Produkte abruft und die Produkte für die Inaugenscheinnahme durch den Kunden und/oder den Kauf vorbereitet, der stattfindet, wenn sich der Kunde in die Verkaufsstätte 8 begeben hat;
- Auch möglich ist, dass an einem Terminal in einer Verkaufsstätte bereits eine entsprechende Ausgabe für den User von der Software hinterlegt wird, die Informationen darüber beinhaltet, wo der Kunde das Produkt abholen kann und/oder es wird eine Liste in der Art eines "Einkaufzettels" an dem Terminal erzeugt, die beispielsweise ausgedruckt werden kann und womit sich der Kunde zu angegebenen Standorten von unterschiedlichen Produkten begeben kann;
- Erfolgt durch einen Mitarbeiter der Verkaufsstätte 8 eine Vorbereitung der Abholung oder Inaugenscheinnahme des Produkts, kann über die Software des Servers 4 eine Mitteilung an den Kunden, nämlich dessen Rechner 2 oder ein anderes, von dem Kunden zuvor spezifiziertes (vorzugsweise mobiles) Endgerät gesendet werden, dass mindestens ein Produkt oder sämtliche Produkte einer Produktliste zur Abholung bereit ist oder am Tag X abholbereit ist;
- Ebenfalls möglich ist, dass auf dem Server 4 über die Software eine Art Merkliste abgelegt ist, die Produkte enthält, für die für den Kunden ein Kauf grundsätzlich in Betracht kommt, ohne dass ein definitiver Wille für eine Reservierung oder einen Kauf gegeben ist;
- Erfolgt eine Bestellung über die Software des Servers 4 oder meldet eine Verkaufsstätte 8 einen Kauf des Kunden, kann eine Speicherung von kaufbezogenen Daten erfolgen. Beispielsweise ist es möglich, dass eine Software ein Kundenbindungssystem beinhaltet, in welchem jedem Kunden für einen Kauf Punkte zugeordnet werden. Ist ein Schwellwert der Punktezahl erreicht, kann eine Mitteilung an den Kunden versendet werden, dass diesem eine Sonderleistung oder eine Rabattierung als eine Art "Belohnung" zukommt.
- Durch geeignete Aufbereitung von Informationen über das Kaufverhalten des Kunden über einen längeren Zeitraum können dem Nutzer Angebote oder gezielt Werbung für seine Interessenbereiche übermittelt werden, was ebenfalls automatisiert durch die Software auf dem Server 4 erfolgen kann.
- In ergänzender Ausgestaltung ist es möglich, dass der Kunde neben der Abholung eines zu kaufenden Produkts in der Verkaufsstätte 8 eine elektronische Anforderung eines Produkts vornimmt, welches ihm dann postalisch übermittelt wird unter Belastung eines Kundenkontos.

Durch eine Schnittstelle zu weiteren Internet-Portalen können Wunschlisten, Produktlisten und Hinweise zu einzelnen Produkten an weitere Online-Portale übergeben werden, insbesondere Händler sowie Portale wie Facebook, YouTube, studiVZ usw.

Möglich ist, dass in der Ausgabe des Internet-Portals eine Vorauswahl von einzelnen Verkaufsstätten aus einer einzigen Handelskette mit deren unterschiedlichen Filialen oder Verkaufsstätten 8 erfolgt.

Möglich ist auch, dass bei dem Kunden eine Ausgabe erzeugt werden kann, welche eine Anfahrtsbeschreibung oder eine Karte beinhaltet, die den Kunden darüber informiert, wie dieser von dem ermittelten Standort zu der Verkaufsstätte gelangt.

Möglich ist weiterhin, dass das Internet-Portal eine Schnittstelle besitzt, über welche eine Verlinkung mit Websites von produktherstellenden Unternehmen geschaffen wird. Informiert sich ein Kunde zunächst auf einer derartigen Website eines produktherstellenden Unternehmens, kann die Website des Unternehmens einen Link besitzen, über welchen der interessierte Kunde auf das Internetportal geleitet wird, so dass dem Kunden bei Nutzung des Links unmittelbar oder mittelbar angezeigt werden kann, wo ein auf der Website recherchiertes Produkt in seiner Nähe zu beziehen ist. Andererseits kann das erfindungsgemäße Online-Portal verlinkt sein mit Websites der produktherstellenden Unternehmen, die so genannte "Brand-Showrooms" bereitstellen und auf welchen der Kunde ergänzende Informationen erhält.

In weiterer Ausgestaltung der Erfindung ist zwischen den Server 4 und die Verkaufsstätten 8 oder die Handelsketten 9 ein weiterer Server und/oder eine weitere Datenbank zwischengeschaltet mit zugeordneter Software, welcher/welche Daten hinsichtlich des Bestands von Produkten an den Verkaufsstätten 8 von diesen erhält und diese in eine geeignetes Datenformat für eine Übergabe an den Server 4 umwandelt. Beispielsweise kann es sich bei dem geeigneten Datenformat um einen tabellarischen Export handeln, welcher den Bestand für die einzelnen Verkaufsstätten beinhaltet. Hierbei kann eine Aktualisierung durch den weiteren Server ständig oder in einem vorgegebenen regelmäßigen oder unregelmäßigen Turnus erfolgen und die Daten können ständig oder in einem gleichen oder abweichenden Turnus von dem weiteren Server zu dem Server 4 übertragen werden. Der weitere Server kann hierbei neben der Belieferung des Servers 4 einer Belieferung weiterer Abnehmer der Daten dienen.

Ein Produkt kann im Rahmen der vorliegenden Erfindung in der Kommunikation mit dem Kunden und/oder intern in dem Netzwerk gemäß Fig. 1 durch seine EAN spezifiziert werden. Neben dem Bestand können über das Netzwerk und das Internet-Portal auch Preise eines Produkts an unterschiedlichen Verkaufsstätten kommuniziert werden.

Möglich ist, dass der Server 4 oder der zuvor genannte weitere Server unmittelbar mit den Warenwirtschaftssystemen der Verkaufsstätten kommunizieren und/oder diese in Echtzeit über einen Web-Service abfragen und sich so ständig aktualisieren. Ebenfalls möglich ist eine Anbindung an Warenwirtschaftssysteme in Echtzeit über einen ESB (Enterprise Service Bus).

Im Falle einer Reservierung wird die Quantität des jeweiligen Produkts im Bestand entsprechend vermindert, um diesen Vorgang in Echtzeit widerzuspiegeln. Möglich ist diese Berücksichtigung der Reduktion des Bestands in den Daten des Internet-Portals und/oder des Servers 4, ggf. auch des weiteren Servers, ohne dass eine Berücksichtigung in dem Warenwirtschaftssystem der Verkaufsstätten 8 erfolgt. Allerdings kann auch ergänzend die Berücksichtigung in dem Warenwirtschaftssystem der Verkaufsstätten 8 erfolgen.

Wenn das reservierte Produkt vom Kunden abgeholt wird, kann dies über die Reservierungs-Schnittstelle dem System zur abschließenden Auswertung übermittelt werden.

### BEZUGSZEICHENLISTE

- 1: Netzwerk
- 2: Rechner
- 3: Leitungsverbindung
- 4: Server
- 5: Schnittstelle
- 6: Schnittstelle
- 7: Leitungsverbindung
- 8: Verkaufstätte
- 9: Handelskette
- 10: Handelsunternehmen
- 11: Standort

## Patentansprüche

1. Verfahren zum Betrieb eines Internet-Portals zur Unterstützung von Kunden bei einem Einkauf eines Produkts mit Produktübergabe in einer Verkaufsstätte (8) mit folgenden Verfahrensschritten:
a) Abfrage eines Produkts, an welchem der Kunde ein Interesse hat, über das Internet-Portal,
b) Ermitteln der Position des Kunden,
c) automatische Auswahl mindestens einer Verkaufsstätte (8) aus mehreren Verkaufsstätten (8) unter Berücksichtigung der Entfernung der Verkaufsstätte (8) von der ermittelten Position des Kunden als Auswahlkriterium,
d) Ermitteln eines aktuellen Bestands des abgefragten Produkts in mindestens einer Verkaufsstätte (8) unter Zugriff auf ein der Verkaufsstätte (8) zugeordnetes Warenwirtschaftssystem,
e) Erzeugung einer Ausgabe, die von
ea) ermittelten aktuellen Beständen des Produkts an mindestens einer Verkaufsstätte (8) und
eb) der Entfernung von Verkaufsstätten (8) von der ermittelten Position des Kunden abhängig ist.

2. Verfahren nach Anspruch 1, **dadurch gekennzeichnet, dass** auf mehrere Warenwirtschaftssysteme unterschiedlicher Verkaufsstätten zugegriffen wird.

3. Verfahren nach Anspruch 1 oder 2, **dadurch gekennzeichnet, dass** die Position des Kunden automatisiert über eine IP-Adresse ermittelt wird.

4. Verfahren nach einem der vorhergehenden Ansprüche, **dadurch gekennzeichnet, dass** die Position des Kunden automatisiert über einen GPS-Sensor eines Rechners (2) des Kunden ermittelt wird.

5. Verfahren nach einem der vorhergehenden Ansprüche, **dadurch gekennzeichnet, dass** die Position des Kunden über eine Abfrage an den Kunden, insbesondere eine Abfrage der Adresse und/oder der Postleitzahl, ermittelt wird.

6. Verfahren nach einem der vorhergehenden Ansprüche, **dadurch gekennzeichnet, dass** in der erzeugten Ausgabe mehrere Verkaufsstätten (8), an denen ein Bestand des abgefragten Produkts ermittelt werden konnte, in Abhängigkeit von der Entfernung der Verkaufsstätte (8) von der ermittelten Position des Kunden sortiert sind.

7. Verfahren nach einem der vorhergehenden Ansprüche, **dadurch gekennzeichnet, dass** eine Reservierung oder Bestellung des Produkts oder einer Produktliste bei einer Verkaufsstätte (8) erzeugt werden kann, für welche die erzeugte Ausgabe einen Bestand des Produkts ausweist, und die Bestellung oder Reservierung in dem der Verkaufsstätte (8) zugeordneten Warenwirtschaftssystem berücksichtigt wird.

8. Verfahren nach einem der vorhergehenden Ansprüche, **dadurch gekennzeichnet, dass**
a) von dem Kunden eine Produktliste erzeugt wird und
ba) die Produktliste über ein Netzwerk an eine Verkaufsstätte (8) übertragen wird und in der
Verkaufsstätte (8) über einen Terminal, insbesondere von dem Kunden, mit dem Kunden verbundenen Personen und/oder Personal des Handelsunternehmens, abgerufen wird oder
bb) aus der erzeugten Produktliste eine physikalische Ausgabe erzeugt wird und an einem
Terminal im Bereich einer Verkaufsstätte (8) anhand der physikalischen Ausgabe die Produktliste erzeugt wird.

9. Verfahren nach Anspruch 8, **dadurch gekennzeichnet, dass** die physikalische Ausgabe mit einem Barcode gebildet ist, welcher von einem dem Terminal in einer Verkaufsstätte (8) zugeordneten Barcode-Scanner erfasst wird.

10. Verfahren nach Anspruch 8 oder 9, **dadurch gekennzeichnet, dass** mehrere Teilproduktlisten erzeugt werden.

11. Verfahren nach einem der Ansprüche 8 bis 10, **dadurch gekennzeichnet, dass** Produkte von den Teilproduktlisten oder Produktlisten an einem Terminal in einer Verkaufsstätte (8) veränderbar sind.

12. Verfahren nach einem der vorhergehenden Ansprüche, **dadurch gekennzeichnet, dass**
a) für einen Kunden Produktlisten erstellt werden und
b) eine Ausgabe erzeugt wird, die
ba) von den ermittelten aktuellen Beständen der Produkte an Verkaufsstätten (8)
abhängig ist,
bb) von der Entfernung von Verkaufsstätten (8) von der ermittelten Position des
Kunden abhängig ist und
bc) davon abhängig ist, für wie viele Produkte der Produktliste an einer Verkaufsstätte (8) ein Bestand vorhanden ist.

13. Verfahren nach einem der vorhergehenden Ansprüche, **dadurch gekennzeichnet, dass**
a) für einen Kunden über einen Auswertezeitraum erfasst wird, an welchen Verkaufsstätten (8) dieser Kunde Produkte gekauft hat, und
b) eine Ausgabe erzeugt wird, die
ba) von den ermittelten Beständen des Produkts an Verkaufsstätten (8) abhängig ist, bb) von der Entfernung von Verkaufsstätten (8) von der ermittelten Position des
Kunden abhängig ist und
bc) davon abhängig ist, an welchen Verkaufsstätten (8) und/oder in welchem
Umfang der Kunde in dem Auswertezeitraum Produkte gekauft hat.

14. Verfahren nach einem der vorhergehenden Ansprüche, **dadurch gekennzeichnet, dass** in der Ausgabe berücksichtigt wird, ob der Bestand der Produkte an einer Verkaufsstätte (8) größer ist als ein Schwellwert.

15. Verfahren nach einem der vorhergehenden Ansprüche, **dadurch gekennzeichnet, dass** eine veränderte Ausgabe erzeugt wird, wenn ein Bestand des Produkts an einer Verkaufsstätte (8) verändert ist.

16. Verfahren nach einem der vorhergehenden Ansprüche, **dadurch gekennzeichnet, dass** die Ausgabe von einer Verfügbarkeitsprognose für die Zukunft abhängig ist, wobei insbesondere die Ausgabe eine Information dahingehend enthält, ob und/oder in welchem Umfang eine zukünftige Veränderung des Bestands an einer Verkaufsstätte (8) erfolgen wird oder wahrscheinlich ist.

17. Verfahren nach einem der vorhergehenden Ansprüche, **dadurch gekennzeichnet, dass** über eine Schnittstelle (6) Produkte oder Produktlisten an weitere Internet-Portals übergeben werden.
